(19) Europäisches Patentamt

European Patent Office

Office européen des brevets

(11) **EP 3 086 280 A1**

(12) **EUROPEAN PATENT APPLICATION**

(43) Date of publication:
26.10.2016 Bulletin 2016/43

(51) Int Cl.:
*G06T 3/40* (2006.01)

(21) Application number: **15305611.4**

(22) Date of filing: **22.04.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Thomson Licensing
92130 Issy-les-Moulineaux (FR)**

(72) Inventor: **Salvador Marcos, Jordi
20257 Hamburg (DE)**

(74) Representative: **Huchet, Anne et al
TECHNICOLOR
1-5, rue Jeanne d'Arc
92130 Issy-les-Moulineaux (FR)**

(54) **METHOD FOR GENERATING A SUPER-RESOLVED IMAGE AND APPARATUS FOR GENERATING A SUPER-RESOLVED IMAGE**

(57) A method for generating a super-resolved (SR) image from an input image allow fast selection of improved mapping functions for converting low-resolution patches obtained by image interpolation into high-resolution patches. This is done by exploiting an enforced hierarchical structure of non-linear maps during an offline training stage. Due to its independency from cross-scale self-similarity assumptions, it allows direct upscaling, which is often beneficial for interactive applications.

Fig.1

EP 3 086 280 A1

## Description

Field of the invention

This invention relates to a method for generating a super-resolved image, and to an apparatus for generating a super-resolved image.

Background

Glasner et al. [1] propose an iterative method for single-image super-resolution that exploits cross-scale self-similarity. The iteration consists in a small-step upscaling, e.g. by a factor of 1.1 (110%). The application of successive upscaling factors results in the desired magnification factor. For each small rectangle image patch, one or more similar patches are found in different downscaled versions of the input image. The appearance of the upscaled patch is learned from the appearance of the corresponding patches at the image scale with the factor 1.1 above the one where the similar patch was found.

Yang et al. [2] propose an iterative method for single-image super-resolution enriched with offline examples obtained in training. The image is upscaled by interpolation with a small magnification factor, e.g. 1.5 (150%), for each small patch in the upscaled image. The corresponding patch in the original image in the same relative coordinates is taken as example (local cross-scale self-similarity). This example is then corrected with a learned transformation on the difference between the low-frequency bands of the original and upscaled images. The entire process is applied iteratively until reaching the desired upscaling factor.

Timofte et al. [3] propose a direct method for super-resolution with offline training. The image is upscaled by interpolation to the desired magnification factor. Then, for every small patch in the upscaled image, a correction is regressed and added. The correction is computed by applying a linear operator (by convolution) on a set of features extracted from the patch. The search of the linear operator is done linearly, that is, iteratively looking for the best matching operator within a database of ~1000 possible operators. These operators are obtained during the offline training stage. However, iteratively looking for the best matching operator takes very long.

Summary of the Invention

The present invention provides an improved method for generating a super-resolved (SR) image from an input image, as disclosed in claim 1. The disclosed method and apparatus allow fast selection of improved mapping functions for converting the low-resolution patches obtained by image interpolation into high-resolution patches. This is done quickly, namely by exploiting an enforced hierarchical structure of non-linear maps during an offline training stage. Since it is independent from cross-scale self-similarity assumptions, it allows direct upscaling, which is often beneficial for interactive applications.

The method first produces a coarse estimate of the super-resolved image by interpolation-based upscaling (e.g. bicubic upscaling). Then, each patch of the upscaled image is mean-subtracted and normalized to traverse $N_T$ ($N_T \geq 1$) independent hierarchical nonlinear mapping functions obtained during offline training. There is no need to extract hand-crafted image features. During each traversal (equivalent to a fast search in logarithmic time), the similarities between the hierarchical modes (ie. compared features) in the map and the normalized patch are accumulated. In principle, the similarities are equivalent to feature responses. The map with best similarity is chosen and applied to the current mean-subtracted patch in order to provide a correction patch, thus improving the quality achieved by an alternative solution with a single map. In one embodiment, contributions from different maps are linearly combined. This may be advantageous, since it provides slightly enhanced quality, at the expense of additional computation time.

The correction patch is added to the corresponding (ie. collocated) interpolation-based patch. That is, the mean-subtracted patch is processed by the locally linear map corresponding to the resulting linearization in the chosen map (or linear combination thereof) and added to the coarse patch, thus allowing a direct upscaling.

An apparatus for generating a super-resolved (SR) image from an input image is disclosed in claim 15. In one embodiment, the apparatus for generating a super-resolved (SR) image from an input image comprises at least one hardware processor and at least one non-transitory, tangible, computer-readable storage medium tangibly embodying at least one software component, e.g. stored in a memory.

In one embodiment, a computer readable medium has stored thereon executable instructions to cause a computer to perform a method as disclosed in claim 1.

In one embodiment, a method for generating a super-resolved (SR) image from an input image, the method comprising interpolation-based upscaling of the input image to produce a coarse estimate of the SR image, dividing the input image and the coarse estimate of the SR image into patches of equal size, and for at least one patch of the coarse estimate of the SR image, calculating its mean value, subtracting the mean value from each pixel of the patch, wherein a mean-subtracted patch is obtained, and normalizing the mean-subtracted patch, wherein a normalized mean-subtracted patch is obtained. Further, the method comprises, for at least one normalized mean-subtracted patch, determining a mapping function, applying the determined mapping function to process the mean-subtracted patch, wherein a correction patch is obtained, and pixel-wise adding the correction patch to the corresponding patch of the coarse estimate of the SR image. Further, said step of determining a mapping function comprises traversing two or more different pre-defined hierarchical tree structures, wherein leaves of each of the hierarchical tree structures have mapping functions associated, and wherein on at least one hierarchy level of at least one of the hierarchical tree structures a comparison is made between a current normalized mean-subtracted patch and at least one reference patch, the comparison resulting in a similarity metric between the current patch and the reference patch, and the similarity metric being used to determine a node of the next hierarchy level, determining one of the two or more hierarchical tree structures that results in a highest accumulated similarity metric for the current normalized mean-subtracted patch, and determining a mapping function that is associated with the leaf node of the selected tree structure that the current normalized mean-subtracted patch has reached, wherein the determined mapping function is applied to process the mean-subtracted patch to obtain said correction patch.

Advantageous embodiments of the invention are disclosed in the dependent claims, the following description and the figures.

Brief description of the drawings

Exemplary embodiments of the invention are described with reference to the accompanying drawings, which show in

Fig.1 an overview of the super-resolution strategy;
Fig.2 coarse-to-fine sorted hierarchical space partition;
Fig.3 a sorted list of "west" and "east" mode vectors;
Fig.4 a flow diagram of computing an optimal linearization;
Fig.5 exemplary patch mapping by weighted contributions;
Fig.6 exemplary patch mapping by maximal score selection;
Fig.7 a decision step in a tree;
Fig.8 an overview of an exemplary offline training stage;
Fig.9 a flow-chart of hierarchical partition training;
Fig.10 a flow-chart of applying Antipodal Spherical Means; and
Fig.11 a block diagram of an apparatus for generating a super-resolved image.

Detailed description of the invention

Initially, an input image is upscaled to the target resolution (upscaling factor s) by any interpolation-based scheme. In one embodiment, the interpolation-based scheme uses bicubic interpolation. In other embodiments, any other scheme is used that produces a similar effect and thus can be considered equivalent. The resulting image has $s*s$ times the number of pixels of the input image. This operation is typically accomplished with polyphase filters, in one embodiment. In other embodiments, any other simple and fast upscaling mechanism is used that produces a similar effect and thus can be considered equivalent.

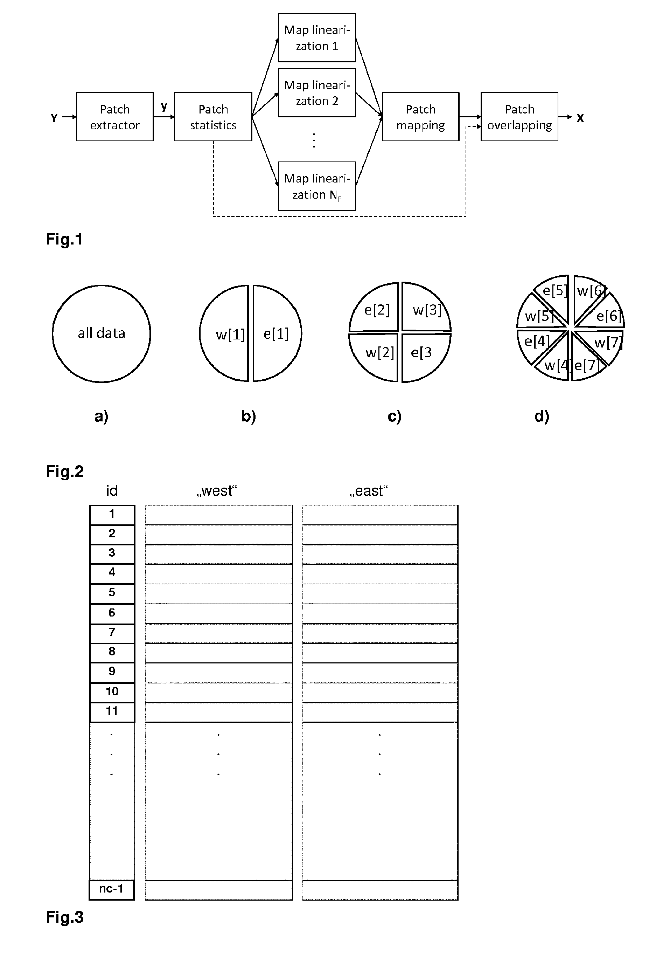

Fig.1 shows, in one embodiment, an overview of the disclosed super-resolution strategy for improving an upscaled image. Let image Y be processed as a collection overlapping square patches of dimensions $Ws*Ws$ pixels (W typically in {3,4,5}, Ws is $W*s$), extracted with shifts of s pixels starting at the top left corner of the image, and let y denote any of these patches. The conversion of the entire image Y into a collection of patches {y} corresponds to the module 'Patch Extractor' in Fig. 1.

The module 'Patch statistics' in Fig. 1 first computes and subtracts the mean from a patch y and then computes the variance (or energy) v of the patch. If the variance is below a threshold T that takes into account the size of the patch and a minimal level of energy per pixel, the subsequent super-resolution processing pipeline is circumvented and the original patch is directly used and sent to the 'Patch overlapping' module. The threshold T is computed as $T = t*Ws*Ws$, where t is the minimal energy level per pixel (typically $10^{-4}$). W is typically in {3,4,5} and s is the upscaling factor.

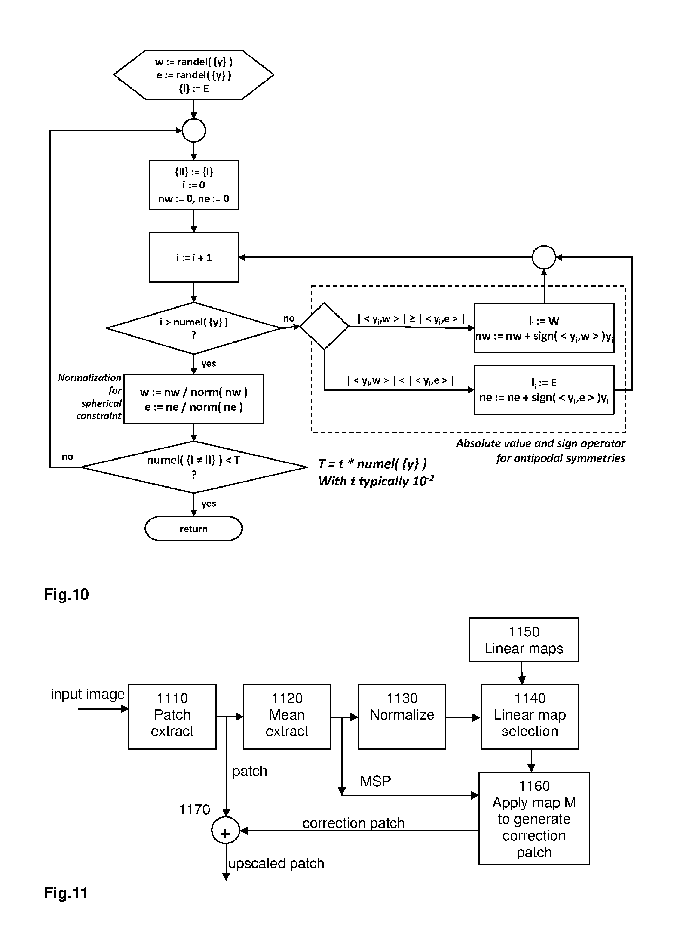

Fig.11 shows an exemplary block diagram of an apparatus for generating a super-resolved image, in one embodiment. An initially upscaled input image, ie. a coarse estimate, is input to a Patch Extraction module 1110, where patches are extracted. The patches are provided to Mean Extraction module 1120, which calculates a mean value of the patch (ie. from of all its pixels, e.g. from their luminance) and subtracts it from each pixel value (thus it can also be viewed as Mean Subtraction module). This results in mean-extracted (or mean-subtracted) patches MSP, which are then input to a Normalizer module 1130. The Normalizer module 1130 normalizes the patch to values around zero, ie. each pixel is mapped to a value in a range -n,...,n (with n being an integer, e.g. n=1). The normalized mean-subtracted patches are input to a Linear Map Selection module 1140, which selects one of a plurality of linear maps provided from a Linear Map storage 1150. The selection depends on the normalized mean-subtracted patch. Further, the Linear Map Selection module 1140 provides a mapping function according to the selected linear map and the normalized mean-subtracted patch. The linear maps may result from a training, as described below, or from other sources. The mapping function, ie. the selected linear map, is provided to a Map Application module 1160, which applies it to the mean-subtracted patch MSP. This results in a correction patch, which is pixelwise added to the coarse input patch in a Patch Adding module 1170. The Patch Adding module 1170 provides the upscaled patches, which are used to generate the upscaled image. In one embodiment, the upscaled patches overlap, and pixels of the upscaled image are obtained from averaging each pixel from all upscaled patches contributing to the respective pixel.

Map linearization

In one embodiment, each of the modules named 'Map linearization' is used to determine:

(1) The local linearization of the n-th globally nonlinear map between upscaled and high-resolution patches, where n ranges from 1 to $N_F$, and
(2) a matching score signaling the adequacy of the locally linear map selected from the n-th globally nonlinear map.

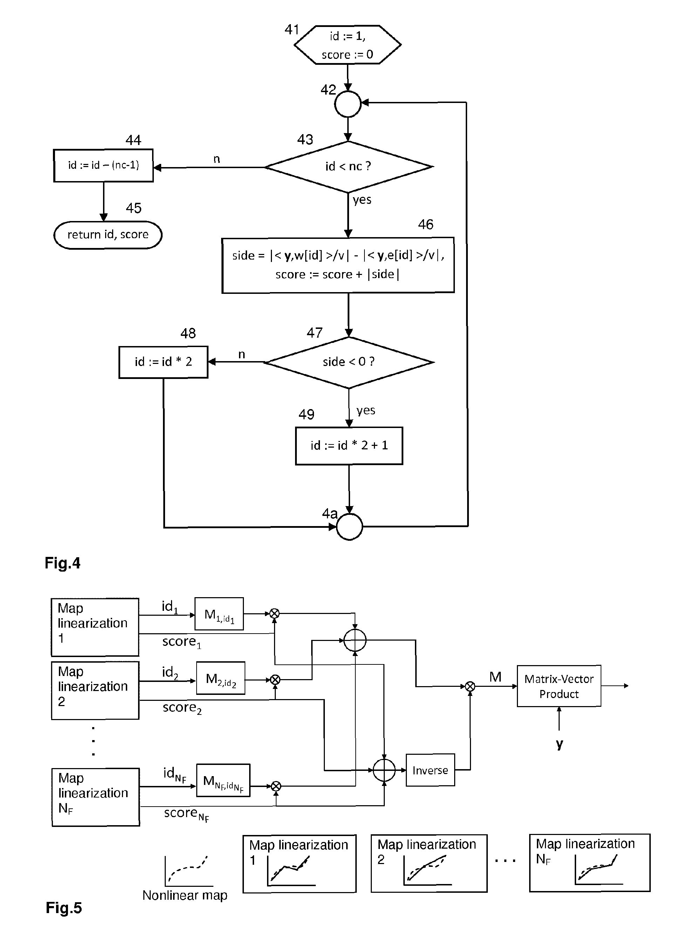

The algorithm of the module is depicted in Fig.4. Note that, in one embodiment, the linearizations are not computed online; instead, they are precomputed during an offline training stage and efficiently selected during this stage thanks to a hierarchical sorting. An exemplary offline training stage is described below.

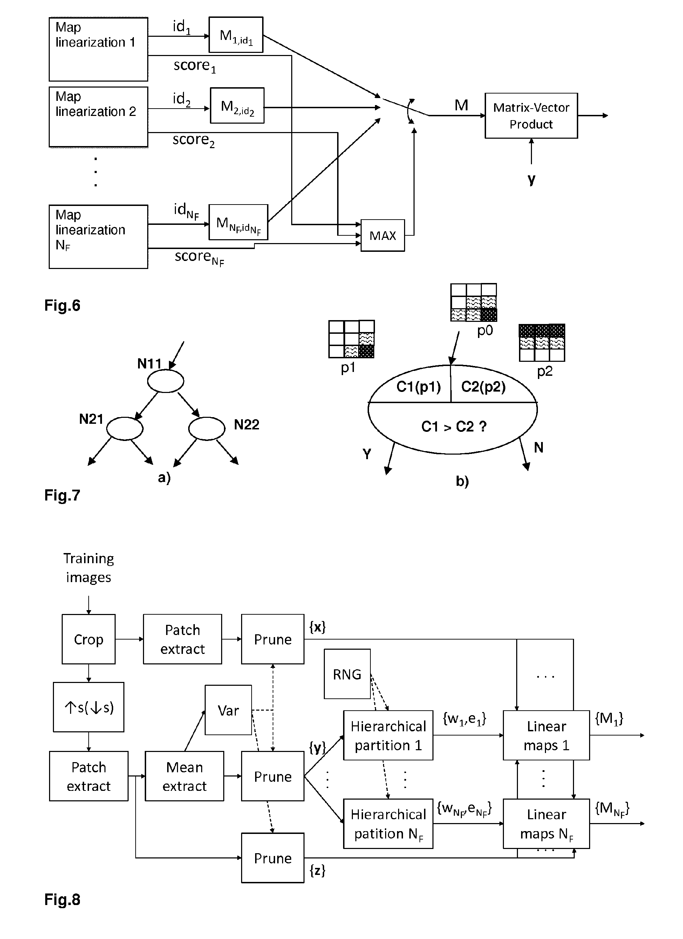

The algorithm is iterative and hierarchical. In one embodiment, on at least one hierarchy level a patch is compared with two different reference patches, as shown in Fig.7. The comparison decides to which of the reference patches the current patch is more similar, and selects a corresponding next node on the next hierarchy level. E.g. in Fig.7, if at a node N11 a first comparison of the current patch p0 with a first reference patch p1 results in a similarity measure (or similarity metric) C1, and a second comparison of the current patch p0 with a second reference patch p2 results in a similarity measure C2, the similarity measures C1,C2 decide which node N21 or N22 of the next lower hierarchy level will be selected next. If C1>C2, node N21 will be selected, otherwise the other node N22 will be selected. In the depicted example, the current input patch p0 is more similar to the first reference patch p1, so that C1 will be higher than C2 and the decision will be "Y". Both comparisons can be made simultaneously. In one embodiment, more than two comparisons with different references are made, each resulting in a similarity measure. The highest similarity measure decides on the next step. Each node uses its individual comparison references. In one embodiment, several or all nodes of the tree use this kind of decision. Remaining nodes may use the conventional type of decision, where the input patch is compared to a single reference pattern and the similarity is compared with a threshold.

This kind of similarity comparison associates the current input patch to one of two classes. These can be named "east" and "west", respectively. As shown in Fig.2, in one embodiment all data are separated into "east" e[1] and "west" w[1] on a first hierarchy level. Each of these groups are recursively further classified into subclasses, which are also referred to as "east" and "west" on their respective level (the terminology is generic, since the classifications may - but need not - use different reference patterns). This results in a coarse-to-fine sorted hierarchical space partition. According to the classification, on each level the patches or corresponding indices or identifiers thereof may be stored in either of two lists in a memory. This is shown in Fig.3.

Fig.4 shows a flow-chart of computing the optimal linearization *id* out of a hierarchically structured map and the corresponding matching score *score,* given the input vector y and its variance v. While in one embodiment the score value is initialized to score:=0, it can in another embodiment be initialized to score:=1. In the first case, the algorithm comprises a calculation 46 of "score:=score+|side|", while the second case, the calculation 46 is "score:=score*|side|".

The algorithm described in the flow-chart of Fig.4 assumes that each hierarchical map (similar to a recursive binary classification) is ordered such that the $2^{1-1}=1$ partition of the top hierarchy or level 1 occupies position 1, the $2^{2-1}=2$ partitions of level 2 occupy positions 2 ("west of 1" subpartition) and 3 ("east of 1" subpartition), the $2^{3-1}=4$ partitions of level 3 occupy positions 4 to 7 ("west of 2", "east of 2", "west of 3" and "east of 3"), and so on. Each of the hierarchical partitions or modes is modeled by two vectors describing the two modes underneath, as shown in Fig.2. Exemplary algorithms to build these data structures offline are described further below.

The traversal can be efficiently computed following the flow chart in Fig.4. In the following description, the term "vectorised" patch means that the pixels of the patch are linearly arranged as elements of a vector, e.g. $[p_{1,1}, p_{1,2}, p_{1,3}, p_{2,1}, p_{2,2}, ...]$. The term "masking" refers, in one embodiment, to a scalar product of the vectorized patch with another vector. The similarity with the different reference patterns is referred to as "west" and "east" modes, respectively (ie. "east" mode means the current input patch is more similar with the first reference patch, and "west" mode means the current input patch is more similar with the first reference patch).

Starting from the highest hierarchy, the input datum (a vectorised patch y) is masked with two vectors describing the "west" and "east" modes underneath the current hierarchy level and variance-normalized (division by y's variance). In order to exploit antipodal symmetries, the absolute values of the masks are computed ($|<y,e[id]>/v|$ and $|<y,w[id]>/v|$, where $<x,y>$ represents a dot product) as measurements of the similarities of the branches with the input datum (ie. the higher, the better). The term antipodal symmetries means that e.g. a pair of "black to white" and "white to black" patches only differ through a sign once their mean values have been subtracted. Thus, they are actually very similar if the sign is taken into account.

The magnitude of the difference between these two values indicates how selective the hierarchical structure is (when classifying the datum y as belonging to one of the two available subclasses) and is accumulated during the traversal in a score *score.* Then, the next finer partition (id corresponding to *east* or *west*) is selected as the one for which the similarity score is highest. In one embodiment, this process is iteratively performed until the lowest hierarchy level is reached. The results are the location of the best local linearization (id) for the input patch y given the current nonlinear map and the adequacy (score) of the map.

Experimentally, a good speed vs. quality trade-off is reached with a number of 10 or 11 hierarchical levels, which correspond to 1024 and 2048 linearizations. More levels produce marginal accuracy gains at increased computation cost and less levels reduce the computation cost with gradually increasing accuracy degradation.

Exemplarily, two possible operation modes in the 'Patch mapping' module, each trading off quality and speed in a different way, are the following. Generally, any kind of mapping function may be used. However, it is particularly advantageous to use nonlinear mapping functions, and find, in a hierarchical approximation, an optimal linearization among several different linearizations. In both following embodiments, a plurality of $N_T$ different nonlinear mapping functions are used.

A flow-chart of a first operation mode, called *"Patch mapping by weighted contributions",* is illustrated in Fig.5. Different local linearizations of the $N_T$ nonlinear mapping functions are weighted by the corresponding matching scores to produce the final locally linear map (a matrix M) to be applied onto the vectorised form of the patch y. This mode provides maximum accuracy, but also high processing cost, due to the accumulation of the (relatively large) local linearizations of the mapping functions selected by each hierarchical traversal. Exemplarily and for illustration purpose only, Fig.5 shows also a nonlinear mapping function and different exemplary linearizations thereof, which may apply also to other embodiments described herein. A flow-chart of a second mode, called *"Patch mapping by maximal score selection",* is shown in Fig.6. This mode provides a very slightly degraded performance (yet almost unnoticeable), but also the advantage of a much reduced processing cost. In both cases, after having obtained the locally linear map M a patch correction is obtained at the output by multiplying the linear map and the input datum (ie., input patch) y.

Patch overlapping

In the last stage, the corrections computed by the nonlinear maps are accumulated in a correction buffer, which is initialized to 0 for all pixels. Each vectorised correction is reshaped to a square patch (of dimensions Ws*Ws pixels) and accumulated on the pixels corresponding to the input patch y. E.g., a counter buffer (initially set to 0 for all pixels) is incremented for these positions.

In one embodiment, a window can also be applied on top of the correction (e.g. Gaussian), such that the border pixels have a smaller contribution than the central ones, for which the mapping function has better knowledge of the neighborhood. Correspondingly, the counters are not simply incremented by 1. Instead, the window weight corresponding to each pixel is accumulated on the corresponding position.

For patches with small energy levels (ie. low variance), the circumvention of the nonlinear mapping depicted by the dashed line in Fig.1 results in a simplified processing: it is enough to increment the counters by 1 (or by the weights of the window) to ensure a seamless transition to the corrected patches.

The final image is formed by dividing each pixel of the correction buffer by the value stored in the counter and adding it to the upscaled image Y.

Offline training

In one embodiment, the linear maps are obtained in an offline training. An overall flow-chart of an exemplary training process is shown in Fig.8. Given a set of conveniently chosen images for training, the first step is to downscale them by the desired upscaling factor s and then upscale the downscaled images by the same factor s (in short, rescaled images). In one embodiment, images with dimensions not divisible by s are cropped before rescaling. Then, both image sets (original and rescaled) are divided into overlapping patches of dimensions Ws*Ws pixels (W typically in {3,4,5}) extracted with shifts of s pixels starting at the top left corner of the image. Let {z} be the set of vectorised rescaled patches, {y} another set obtained by subtracting the means to the vectors in {z}, and {**x**} the vectorised patches in the original images. The variance or energy of each vector in {y} is computed and used to prune those vectors with small energy from all three sets. The threshold is computed as t*Ws*Ws, where t is the minimal energy level per pixel (typically around $10^{-4}$), W typically in {3,4,5} and s the upscaling factor. The goal is to obtain $N_F$ independent nonlinear maps ($\{M_1\}$ to $\{M_{N_F}\}$) with an efficient hierarchical structure ($\{w_1,e_1\}$ to $\{w_{N_F},e_{N_F}\}$).

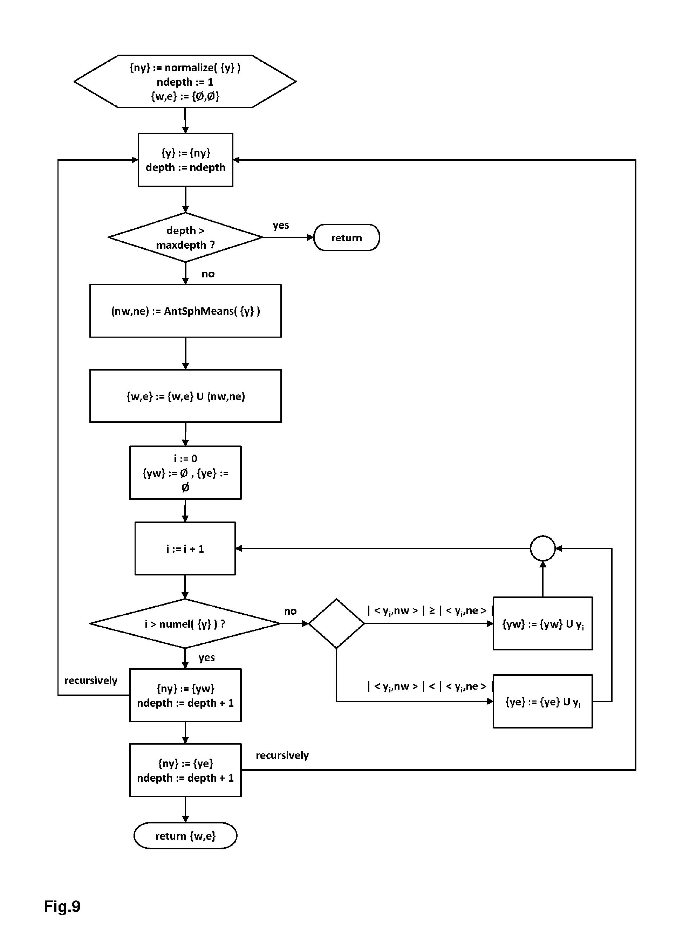

The hierarchical structures should fulfill that the mapping functions between upscaled and original patches at the lowest hierarchies are linear (or at least almost linear), so that the method is sound. This can be accomplished by carefully selecting the hierarchical modes (ie. decision criteria), which are the output of the blocks named 'Hierarchical partition' in Fig.8. An exemplary detailed algorithm of these modules is outlined in Fig.9. The Random Number Generator module RNG in Fig.8 indicates that the $N_F$ hierarchical clusters are independent. Details of the 'AntSphMeans' (Antipodal Spherical Means) block in Fig.9 are shown in Fig.10.

Finally, each block named 'Linear maps' in Fig.8 performs the two following operations: First, the contents of the lowest-hierarchy partitions are determined by traversing each hierarchical partition with {**y**}, using the algorithm described above. Then, the ideal local linear map of each lowest hierarchy partition must accomplish that X=Z+MY, where X (also Z, Y) is the matrix obtained by column-stacking all vectors in {**x**} (also {**z**}, {**y**}) corresponding to elements in the current partition and M is a (Ws*Ws)*(Ws*Ws) linear map to be determined for the current partition. The regularized least squares solution is $M=(1+\lambda)(X-Z)Y^T(YY^T+\lambda I)^{-1}$, where $\lambda$ is a small regularization parameter (typically around $10^{-4}$) and I is an identity matrix.

Fig.9 shows a flow-chart of an exemplary process for Hierarchical partition training. The depicted algorithm recursively accumulates mode vectors {w,e} across scales. The mode vectors are obtained by an algorithm similar in concept to k-means, but adapted to incorporate antipodal symmetries and normalized (spherical) vectors (namely Antipodal Spherical Means). The process provides for each input patch y the groups of east and west mode vectors.

Fig.10 shows a flow-chart for Antipodal Spherical Means, in one embodiment. This iterative algorithm provides two pseudo-optimal mode vectors to classify the set of input vectors ({y}) as belonging to one of two classes (W and E, corresponding to mode vectors w and e).

In one embodiment, an apparatus for generating a super-resolved (SR) image from an input image comprises a coarse upscaler module adapted for interpolation-based upscaling of the input image to produce a coarse estimate of the SR image, a patch extractor module adapted for dividing the input image and the coarse estimate of the SR image into patches of equal size, a calculator module adapted for calculating, for at least one patch of the coarse estimate of the SR image, its mean value and subtracting the mean value from each pixel of the patch, wherein a mean-subtracted patch is obtained, and a normalizer module adapted for normalizing the mean-subtracted patch, wherein a normalized mean-subtracted patch is obtained. Further, the apparatus comprises a mapping function determiner module adapted for determining, for at least one normalized mean-subtracted patch, a mapping function, a patch processing module for applying the determined mapping function to process the mean-subtracted patch, wherein a correction patch is obtained, and an adder module adapted for pixel-wise adding the correction patch to the corresponding patch of the coarse estimate of the SR image.

The mapping function determiner module comprises a search module adapted for traversing two or more different pre-defined hierarchical tree structures, wherein leaves of each of the hierarchical tree structures have mapping functions associated, and wherein on at least one hierarchy level of at least one of the hierarchical tree structures a comparison is made between a current normalized mean-subtracted patch and at least one reference patch, the comparison resulting in a similarity metric between the current patch and the reference patch, and the similarity metric being used to determine a node of the next hierarchy level. The mapping function determiner module further comprises a decision module adapted for determining one of the two or more hierarchical tree structures that results in a highest accumulated similarity metric for the current normalized mean-subtracted patch, and for determining a mapping function that is associated with the leaf node of the selected tree structure that the current normalized mean-subtracted patch has reached, wherein the determined mapping function is applied to process the mean-subtracted patch to obtain said correction patch.

Advantages of the present invention comprise one or more of the following. The disclosure improves the image quality for example-based super-resolution thanks to the selection of the best non-linear mapping function. Further, it allows fast computation due to the sub-linear search time induced by the hierarchically structured maps. Furthermore, the responses to the traversed modes of the hierarchical maps act as linear features. This means that, using this strategy, it can be avoided to compute a typically large number of features required to describe a patch (usually in the order of approximately twice the size of the patch in pixels) during a preprocessing stage. Such stage is common in regression-based super resolution (see, e.g. [3]).

In the following, various advantageous embodiments are listed.

In one embodiment, a method for generating a super-resolved (SR) image from an input image, comprises interpolation-based upscaling of the input image to produce a coarse estimate of the SR image; dividing the input image and the coarse estimate of the SR image into patches of equal size; for at least one patch of the coarse estimate of the SR image, calculating its mean value, subtracting the mean value from each pixel of the patch, wherein a mean-subtracted patch is obtained, and normalizing the mean-subtracted patch, wherein a normalized mean-subtracted patch is obtained; and for at least one normalized mean-subtracted patch determining a mapping function; applying the determined mapping function to process the mean-subtracted patch, wherein a correction patch is obtained; and pixel-wise adding the correction patch to the corresponding patch of the coarse estimate of the SR image. Said determining a mapping function comprises traversing two or more different pre-defined hierarchical tree structures, wherein leaves of each of the hierarchical tree structures have mapping functions associated, and wherein on at least one hierarchy level of at least one of the hierarchical tree structures a comparison is made between a current normalized mean-subtracted patch and at least one reference patch, the comparison resulting in a similarity metric between the current patch and the reference patch, and the similarity metric being used to determine a node of the next hierarchy level; determining one of the two or more hierarchical tree structures that results in a highest accumulated similarity metric for the current normalized mean-subtracted patch; and determining a mapping function that is associated with the leaf node of the selected tree structure that the current normalized mean-subtracted patch has reached, wherein the determined mapping function is applied to process the mean-subtracted patch to obtain said correction patch.

In one embodiment, the mapping functions are linearizations of a non-linear mapping function.

In one embodiment, different leaves of a pre-defined hierarchical tree structure are associated with different linearizations of a same non-linear mapping function. In one embodiment, the two or more different pre-defined hierarchical tree structures use at least different reference patches for said comparison on said at least one hierarchy level.

In one embodiment, each of the two or more pre-defined hierarchical tree structures is associated with a different non-linear mapping function.

In one embodiment, said two or more different pre-defined hierarchical tree structures are simultaneously traversed.

In one embodiment, the similarity metric is a numeric value indicating similarity between the current patch and the reference patch.

In one embodiment, on at least one hierarchy level of at least one pre-defined hierarchical tree structure a comparison is made between the current normalized mean-subtracted patch and at least two different reference patches, wherein each comparison results in a similarity metric and wherein the branch with higher similarity is used to determine a node of the next hierarchy level according to the respective pre-defined hierarchical tree structure.

In one embodiment, the determined mapping function is applied to the mean-subtracted patch corresponding to the current normalized mean-subtracted patch. In one embodiment, said normalizing the mean-subtracted patch comprises normalizing each pixel of the mean-subtracted patch.

In one embodiment, similarity between patches is calculated by pixel-wise comparison, and wherein each pixel of the normalized mean-subtracted patches and the reference patches has a value in the range of *[-n,...,n]*, with n being an integer.

In one embodiment, the similarity metric is positive and is calculated according to

$$\sqrt{((p_1 - p_1')^2 + (p_2 - p_2')^2 + \cdots)}$$ (also written as sqrt(sqr($p_1$x$p_1$')+sqr($p_2$+$p_2$')+...), with $p_1$,$p_2$,... being luminance values of pixels of the normalized mean-subtracted patches and $p_1$',$p_2$',... being luminance values of pixels of the reference patches.

In an embodiment, the disclosed solution requires storage of a large number of hierarchical memory structures for the $N_T$ hierarchical partitions. In an embodiment, the disclosed solution requires access to two different memory buffers to determine each progressively finer hierarchy. In an embodiment, the disclosed solution leads to an exponentially growing course of the counter *id* while traversing the hierarchical structures.

The use of the verb "comprise" and its conjugations does not exclude the presence of elements or steps other than those stated in a claim. Furthermore, the use of the article "a" or "an" preceding an element does not exclude the presence of a plurality of such elements. Several "means" may be represented by the same item of hardware. Furthermore, the invention resides in each and every novel feature or combination of features.

It should be noted that although shown as a solution for upscaling images, other types of classification may be constructed other than image upscaling, as would be apparent to those of ordinary skill in the art, all of which are contemplated within the spirit and scope of the invention. E.g., algorithms based on the same idea could be applied to a number of image processing problems, especially deblurring and denoising, and also to other signal processing problems, such as communications and audio.

While there has been shown, described, and pointed out fundamental novel features of the present invention as applied to preferred embodiments thereof, it will be understood that various omissions and substitutions and changes in the apparatus and method described, in the form and details of the devices disclosed, and in their operation, may be made by those skilled in the art without departing from the spirit of the present invention. Although the present invention has been disclosed with regard to image upscaling, one skilled in the art would recognize that the method and devices described herein may be applied to other signal processing problems. It is expressly intended that all combinations of those elements that perform substantially the same function in substantially the same way to achieve the same results are within the scope of the invention. The terms similarity metric and similarity measure are used as equivalents. Substitutions of elements from one described embodiment to another are also fully intended and contemplated.

It will be understood that the present invention has been described purely by way of example, and modifications of detail can be made without departing from the scope of the invention.

Each feature disclosed in the description and (where appropriate) the claims and drawings may be provided independently or in any appropriate combination. Features may, where appropriate be implemented in hardware, software, or a combination of the two. Connections may, where applicable, be implemented as wireless connections or wired, not necessarily direct or dedicated, connections. Reference numerals appearing in the claims are by way of illustration only and shall have no limiting effect on the scope of the claims.

Cited References

[1] D. Glasner, S. Bagon and M. Irani, "Super-Resolution from a Single Image", Proc. ICCV, 2009

[2] J. Yang, Z. Lin, S. Cohen, "Fast Image Super-resolution Based on In-place Example Regression", Proc. CVPR 2013

[3] R. Timofte, V. de Smet and L. Van Gool, "Anchored Neighborhood Regression for Fast Example-Based Super-Resolution", Proc. ICCV 2013

**Claims**

1. A method for generating a super-resolved (SR) image from an input image, comprising

   - interpolation-based upscaling of the input image to produce a coarse estimate of the SR image;
   - dividing the input image and the coarse estimate of the SR image into patches of equal size;
   - for at least one patch of the coarse estimate of the SR image, calculating its mean value, subtracting the mean value from each pixel of the patch, wherein a mean-subtracted patch is obtained, and normalizing the mean-subtracted patch, wherein a normalized mean-subtracted patch is obtained;
   and for at least one normalized mean-subtracted patch
   - determining a mapping function;
   - applying the determined mapping function to process the mean-subtracted patch, wherein a correction patch is obtained; and
   - pixel-wise adding the correction patch to the corresponding patch of the coarse estimate of the SR image,
   wherein said determining a mapping function comprises
   - traversing two or more different pre-defined hierarchical tree structures, wherein leaves of each of the hierarchical tree structures have mapping functions associated, and wherein on at least one hierarchy level of at least one of the hierarchical tree structures a comparison is made between a current normalized mean-subtracted patch and at least one reference patch, the comparison resulting in a similarity metric between the current patch and the reference patch, and the similarity metric being used to determine a node of the next hierarchy level;
   - determining one of the two or more hierarchical tree structures that results in a highest accumulated similarity metric for the current normalized mean-subtracted patch; and
   - determining a mapping function that is associated with the leaf node of the selected tree structure that the current normalized mean-subtracted patch has reached, wherein the determined mapping function is applied to process the mean-subtracted patch to obtain said correction patch.

2. Method according to claim 1, wherein the mapping functions are linearizations of a non-linear mapping function.

3. Method according to any of the claims 1-2, wherein different leaves of a pre-defined hierarchical tree structure are associated with different linearizations of a same non-linear mapping function.

4. Method according to any of the claims 1-3, wherein the two or more different pre-defined hierarchical tree structures use at least different reference patches for said comparison on said at least one hierarchy level.

5. Method according to any of the claims 1-4, wherein each of the two or more pre-defined hierarchical tree structures is associated with a different non-linear mapping function.

6. Method according to any of the claims 1-5, wherein said two or more different pre-defined hierarchical tree structures are simultaneously traversed.

7. Method according to any of the claims 1-6, wherein the similarity metric is a numeric value indicating similarity between the current patch and the reference patch.

8. Method according to any of the claims 1-7, wherein on at least one hierarchy level of at least one pre-defined hierarchical tree structure a comparison is made between the current normalized mean-subtracted patch and at least two different reference patches, wherein each comparison results in a similarity metric and wherein the branch with higher similarity is used to determine a node of the next hierarchy level according to the respective pre-defined hierarchical tree structure.

9. Method according to any of the claims 1-8, wherein the determined mapping function is applied to the mean-subtracted patch corresponding to the current normalized mean-subtracted patch.

10. Method according to any of the claims 1-9, wherein said normalizing the mean-subtracted patch comprises normalizing each pixel of the mean-subtracted patch.

11. Method according to any of the claims 1-10, wherein similarity between patches is calculated by pixel-wise comparison, and wherein each pixel of the normalized mean-subtracted patches and the reference patches has a value in the range of $[-n,...,n]$, with $n$ being an integer.

**12.** Method according to claim 11, wherein the similarity metric is positive and is calculated according to $sqrt(sqr(p_1 x p_1') + sqr(p_2 + p_2') + ...)$, with $p_1, p_2, ...$ being pixels of the normalized mean-subtracted patches and $p_1', p_2', ...$ being pixels of the reference patches.

**13.** Method according to any of the claims 1-12, wherein patches overlap in the input image and the super-resolved image.

**14.** Method according to any of the claims 1-13, wherein p is a magnification factor between the input image and the super-resolved image, and wherein patches in the input image and the super-resolved image overlap by p pixels.

**15.** An apparatus for generating a super-resolved (SR) image from an input image, the apparatus comprising a processor and
a memory storing instructions that, when executed, cause the apparatus to perform the method steps of any one or more of the claims 1-14.

Map lineari-
zation 1

Map lineari-
zation 2

Y → | Patch
extractor | → y → | Patch
statistics | ⋮ | Patch
mapping | → | Patch
overlapping | → X

Map lineari-
zation $N_F$

**Fig.1**

all data

w[1] | e[1]

e[2] | w[3]
w[2] | e[3]

e[5] | w[6]
w[5] | e[6]
e[4] | w[7]
w[4] | e[7]

a)                    b)                    c)                    d)

**Fig.2**

| id | „west" | „east" |
|---|---|---|
| 1 | | |
| 2 | | |
| 3 | | |
| 4 | | |
| 5 | | |
| 6 | | |
| 7 | | |
| 8 | | |
| 9 | | |
| 10 | | |
| 11 | | |
| . | . | . |
| . | . | . |
| . | . | . |
| nc-1 | | |

**Fig.3**

41 — id := 1,
score := 0

42

43 — id < nc ?

44 — id := id − (nc-1)     n

45 — return id, score

46 — side = |< y,w[id] >/v | - |< y,e[id] >/v |,
score := score + |side|     yes

47 — side < 0 ?

48 — id := id * 2     n

49 — id := id * 2 + 1     yes

4a

**Fig.4**

Map linearization 1 — $id_1$ — $M_{1,id_1}$ — $\otimes$     $score_1$

Map linearization 2 — $id_2$ — $M_{2,id_2}$ — $\otimes$     $score_2$

Map linearization $N_F$ — $id_{N_F}$ — $M_{N_F,id_{N_F}}$ — $\otimes$     $score_{N_F}$

$\oplus$     $\oplus$     Inverse     $\otimes$     M — Matrix-Vector Product

y

Nonlinear map

Map linearization 1

Map linearization 2

Map linearization $N_F$

**Fig.5**

EP 3 086 280 A1

Fig.6

Fig.7

Fig.8

12

{ny} := normalize( {y} )
ndepth := 1
{w,e} := {∅,∅}

{y} := {ny}
depth := ndepth

depth >
maxdepth ?

yes

return

no

(nw,ne) := AntSphMeans( {y} )

{w,e} := {w,e} U (nw,ne)

i := 0
{yw} := ∅ , {ye} :=
∅

i := i + 1

i > numel( {y} ) ?

no

$| < y_i, nw > | \geq | < y_i, ne > |$

{yw} := {yw} U $y_i$

$| < y_i, nw > | < | < y_i, ne > |$

{ye} := {ye} U $y_i$

yes

recursively

{ny} := {yw}
ndepth := depth + 1

{ny} := {ye}
ndepth := depth + 1

recursively

return {w,e}

**Fig.9**

**Fig.10**

**Fig.11**

Europäisches
Patentamt

European
Patent Office

Office européen
des brevets

# EUROPEAN SEARCH REPORT

Application Number

EP 15 30 5611

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | TIMOFTE RADU ET AL: "Anchored Neighborhood Regression for Fast Example-Based Super-Resolution", 2013 IEEE INTERNATIONAL CONFERENCE ON COMPUTER VISION, IEEE, 1 December 2013 (2013-12-01), pages 1920-1927, XP032573137, ISSN: 1550-5499, DOI: 10.1109/ICCV.2013.241 [retrieved on 2014-02-28] * abstract * * page 1920, column 2 - page 1921 * * page 1923 - page 1924 * ----- | 1-15 | INV. G06T3/40 |
| Y | EDUARDO PEREZ-PELLITERO ET AL: "Fast Super-Resolution via Dense Local Training and Inverse Regressor Search", ADVANCES IN COMMUNICATION NETWORKING : 20TH EUNICE/IFIP EG 6.2, 6.6 INTERNATIONAL WORKSHOP, RENNES, FRANCE, SEPTEMBER 1-5, 2014, REVISED SELECTED PAPERS, vol. 9005, 5 November 2014 (2014-11-05), pages 346-359, XP055222739, DE ISSN: 0302-9743 ISBN: 978-3-642-36699-4 * abstract * * page 353 - page 354 * ----- -/-- | 1-15 | |

TECHNICAL FIELDS
SEARCHED (IPC)

G06T

The present search report has been drawn up for all claims

| Place of search | Date of completion of the search | Examiner |
|---|---|---|
| Munich | 22 October 2015 | Millet, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 30 5611

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LEO BREIMAN: "Random Forests", MACHINE LEARNING, KLUWER ACADEMIC PUBLISHERS-PLENUM PUBLISHERS, NE, vol. 45, no. 1, 1 October 2001 (2001-10-01), pages 5-32, XP019213368, ISSN: 1573-0565, DOI: 10.1023/A:1010933404324 * abstract * * page 25 - page 29 * | 1-15 | |
| A | PEREZ-PELLITERO EDUARDO ET AL: "Accelerating Super-Resolution for 4K upscaling", 2015 IEEE INTERNATIONAL CONFERENCE ON CONSUMER ELECTRONICS (ICCE), IEEE, 9 January 2015 (2015-01-09), pages 317-320, XP032749813, DOI: 10.1109/ICCE.2015.7066429 [retrieved on 2015-03-23] * abstract * | 1-15 | |
| A | ZHANG KAIBING ET AL: "Learning Multiple Linear Mappings for Efficient Single Image Super-Resolution", IEEE TRANSACTIONS ON IMAGE PROCESSING, IEEE SERVICE CENTER, PISCATAWAY, NJ, US, vol. 24, no. 3, 1 March 2015 (2015-03-01), pages 846-861, XP011571280, ISSN: 1057-7149, DOI: 10.1109/TIP.2015.2389629 [retrieved on 2015-01-22] * abstract * | 1-15 | TECHNICAL FIELDS SEARCHED (IPC) |

The present search report has been drawn up for all claims

| Place of search | Date of completion of the search | Examiner |
|---|---|---|
| Munich | 22 October 2015 | Millet, Christophe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. GLASNER ; S. BAGON ; M. IRANI.** Super-Resolution from a Single Image. *Proc. ICCV,* 2009
- **J. YANG ; Z. LIN ; S. COHEN.** Fast Image Super-resolution Based on In-place Example Regression. *Proc. CVPR,* 2013

- **R. TIMOFTE, V. ; DE SMET ; L. VAN GOOL.** Anchored Neighborhood Regression for Fast Example-Based Super-Resolution. *Proc. ICCV,* 2013